# EUROPÄISCHE PATENTSCHRIFT

(11) **EP 2 280 822 B1**
(45) Veröffentlichungstag und Bekanntmachung des Hinweises auf die Patenterteilung: **11.03.2015**
(21) Anmeldenummer: 09757322.4
(22) Anmeldetag: 05.06.2009
(51) Int. Cl.: B29C 73/16, B29L 30/00

(54) **VORRICHTUNG ZUM EINBRINGEN VON LUFT UND/ODER ABDICHTMITTEL IN EINEN REIFEN**
DEVICE FOR INTRODUCING AIR AND/OR SEALING MEANS INTO A TIRE
DISPOSITIF DESTINÉ À INTRODUIRE DE L'AIR ET/OU UN AGENT D'ÉTANCHÉITÉ DANS UN PNEUMATIQUE

(30) Priorität: 06.06.2008 DE 102008027024
(43) Veröffentlichungstag der Anmeldung: 09.02.2011
(73) Patentinhaber: Sumitomo Rubber Industries, Ltd., Hyogo-ken (JP)
(72) Erfinder: ECKHARDT, Arnold, 63691 Randstadt (DE)
(74) Vertreter: Manitz, Finsterwald & Partner GbR
(86) Internationale Anmeldenummer: PCT/EP2009/004066
(87) Internationale Veröffentlichungsnummer: WO 2009/146939

(56) Entgegenhaltungen:
- WO-A-2008/001179
- WO-A-2008/035163
- WO-A2-2007/102066
- DE-A1- 10 106 468
- DE-U1-202007 016 242
- US-A1- 2003 056 851
- US-A1- 2008 029 181

## Beschreibung

Die vorliegende Erfindung betrifft eine Vorrichtung zum Einbringen von Luft und/oder Abdichtmittel in einen Reifen, insbesondere Kraftfahrzeugreifen, mit einer elektrischen Pumpe oder Kompressor, einem elektrischen Anschlusskabel für die Pumpe oder den Kompressor, welches an seinem Ende ein Verbindungselement, insbesondere Stecker, aufweist zur Verbindung des Anschlusskabels mit einer Stromversorgung, insbesondere dem Zigarrenanzünder eines Kraftfahrzeuges, mit einem mit der elektrischen Pumpe oder dem Kompressor verbundenen oder verbindbaren Schlauch für die Luft und/oder das Abdichtmittel, dessen anderes Ende mit dem zu befüllenden Reifen verbindbar ist, und mit einem Gehäuse zur Aufnahme mindestens eines Teils der Vorrichtungsbestandteile, wobei ein Umschaltventil zum Umschalten der Verbindung zwischen elektrischer Pumpe oder Kompressor einerseits und wahlweise einer Verbindung zu dem Behälter mit einem Schlauch zum Einbringen von Luft oder Abdichtmittel in den Reifen oder einem Schlauch zum reinen Aufpumpen des Reifens andererseits vorgesehen ist.

Derartige Vorrichtungen, wie sie beispielsweise aus WO-A-2007/102066 bekannt sind, werden mittlerweile häufig als sogenanntes Pannenset als Ersatz für Reserveräder verwendet. Durch das Umschaltventil kann die Vorrichtung auf einfache Weise entweder nur zum Aufpumpen eines platten Reifens oder zum Abdichten und anschließenden Aufpumpen eines Reifens verwendet werden. Die Vorrichtung erhält dadurch einen höheren wirtschaftlichen Wert.

Der Erfindung liegt die Aufgabe zugrunde, die Handhabung einer solchen Vorrichtung zu verbessern.

Diese Aufgabe wird dadurch gelöst, dass das Umschaltventil eine Druckentlastung zum Abführen der Druckluft in Zwischenstellungen des Ventils aufweist.

Nach der Erfindung weist das Umschaltventil eine Druckentlastung zum Abführen der Druckluft in Zwischenstellungen auf. Dadurch ist die Betätigung des Umschaltventils erleichtert.

Das Umschaltventil kann hierfür insbesondere einen in einem Gehäuse drehbar gelagerten Ventileinsatz mit einer Eintrittsöffnung und zwei Austrittsöffnungen aufweisen, die ringsum gegenüber dem Ventilgehäuse abgedichtet sind, während der Ventileinsatz im Übrigen gegenüber dem Ventilgehäuse nicht oder nicht vollständig abgedichtet ist. Durch die Abdichtung um die Öffnungen ist gewährleistet, dass die Druckluft des Kompressors vollständig dem Behälter mit dem Abdichtmittel oder dem Schlauch zum direkten Aufpumpen des Reifens zugeführt wird. Durch die fehlende Abdichtung im Übrigen kann in Zwischenstellungen die Druckluft abströmen, nämlich über das Spiel zwischen Ventileinsatz und Gehäuse.

Um das Abströmen der Druckluft in Zwischenstellungen zu erleichtern, kann der Ventileinsatz bevorzugt auf mindestens einer Seite der Öffnungen eine umlaufende Ringnut aufweisen. Dies ist auch herstellungstechnisch einfach und kostengünstig. Eine noch weitere Verbesserung der Abströmung ergibt sich, wenn die Ringnut über mindestens ein Sackloch oder eine Durchtrittsöffnung mit dem Außenraum in Verbindung steht.

Durch die Anordnung des Anschlusskabels und des Verbindungselements in eigenen Aufnahmen im Gehäuse nach einer weiteren Ausgestaltung der Erfindung ist die Handhabung gegenüber bekannten Vorrichtungen vereinfacht. Insbesondere kann das Verbindungselement sofort entnommen und an eine Stromversorgung angeschlossen werden, während bei bekannten Vorrichtungen mit nur einer Aufnahme das Verbindungselement oftmals nicht sofort offenbar ist. Vielmehr ist das Verbindungselement oft von Kabelabschnitten verdeckt. Dadurch muss es nicht nur mühsam entworren werden, sondern es ist oftmals auch gar nicht sofort sichtbar, sodass für den Nutzer sich nicht auf Anhieb erschließt, womit er den elektrischen Anschluss herstellen soll.

Bevorzugt ist die Aufnahme für das Verbindungselement von den Dimensionen her weitgehend an das Verbindungselement angepasst. Dies spart einerseits Platz und hat andererseits den Vorteil, dass das Verbindungselement im Gehäuse fixiert ist.

Weiterhin ist es bevorzugt, wenn die Aufnahme eine Ausnehmung für einen Fingereingriff aufweist oder so ausgebildet ist, dass ein Teil des Verbindungselementes über die Aufnahme übersteht und von außen her leicht ergriffen werden kann. Die Entnahme des Verbindungselementes ist dadurch weiter vereinfacht.

Um die Handhabung sofort erkennbar zu machen, ist die Aufnahme für das Verbindungselement nach einer weiteren Ausgestaltung der Erfindung in einem gut sichtbaren Bereich des Gehäuses angeordnet, bevorzugt in einer Seitenwand oder einem zwei benachbarte Seiten des Gehäuses übergreifenden Eckbereich.

Bevorzugt ist es außerdem, wenn beide Aufnahmen unmittelbar nebeneinander angeordnet sind. Dadurch ist nur eine kurze Kabelüberführung zwischen den beiden Aufnahmen erforderlich. Diese ist bevorzugt im Gehäuse geführt, sodass kein Kabel über das Gehäuse nach außen vorsteht.

Weiterhin ist es bevorzugt, wenn die Längserstreckung des Verbindungselementes in Gebrauchslage des Gehäuses aufrecht steht. Die Verbindung zwischen den beiden Aufnahmen ist diesem Fall bevorzugt im unteren Bereich der Aufnahme für das Verbindungselement angeordnet. Auch dies ist wiederum von der Handhabung her besonders günstig.

Ein Ausführungsbeispiel der Erfindung ist in der Zeichnung dargestellt und wird nachfolgend beschrieben. Es zeigen, jeweils in schematischer Darstellung:
- Fig. 1: eine perspektivische Ansicht einer erfindungsgemäßen Vorrichtung,
- Fig. 2: eine Seitenansicht der Vorrichtung von Fig. 1,
- Fig. 3: eine um 90° gedrehte Seitenansicht,
- Fig. 4: eine Ansicht eines nicht erfindungsgemäßen 3/2-Wegeventils,
- Fig. 5: eine Seitenansicht des Ventileinsatzes des Ventils von Fig. 4,
- Fig. 6: einen Vertikalschnitt durch das Gehäuse des Ventils von Fig. 4,
- Fig. 7: einen Schnitt durch das 3/2-Wegeventil der Vorrichtung von Fig. 1 und
- Fig. 8: einen um 90° gedrehten Schnitt durch das 3/2-Wegeventil von Fig. 1.

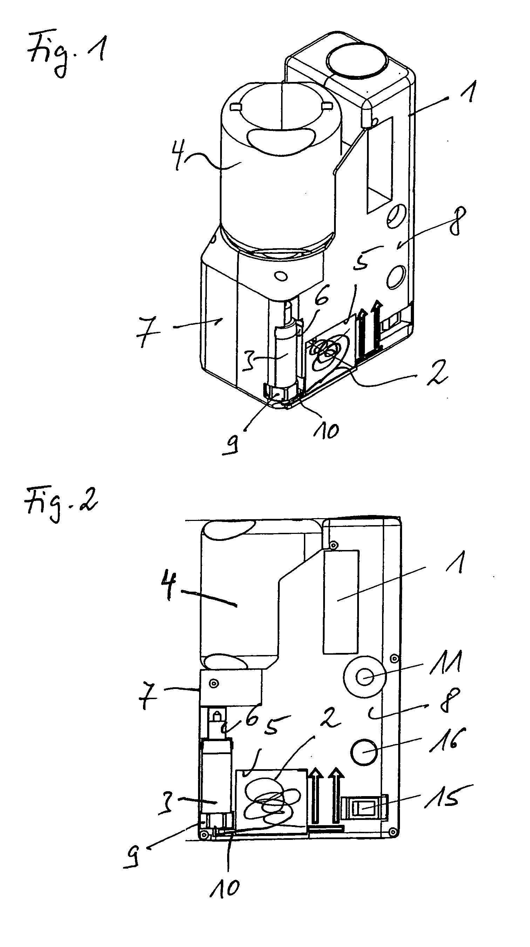

Die in den Fig. 1 bis 3 dargestellte Vorrichtung umfasst ein Gehäuse 1, eine im Gehäuse 1 angeordnete, hier nicht erkennbare elektrische Pumpe oder Kompressor und ein elektrisches Anschlusskabel 2, welches an seinem Ende ein Verbindungselement 3, insbesondere Stecker, zur Verbindung des Anschlusskabels 2 mit einer Stromversorgung, insbesondere dem Zigarrenanzünder eines Kraftfahrzeuges aufweist. Darüber hinaus umfasst die Vorrichtung einen in der Zeichnung nicht erkennbaren Schlauch, welcher mit dem Kompressor verbunden oder verbindbar ist, für die Luft und/oder das Abdichtmittel, dessen anderes Ende mit dem zu befüllenden Reifen verbindbar ist, einen Ein/Aus-Schalter 15 sowie eine LED 16 zum Ausleuchten des Arbeitsbereiches und zum Anzeigen der Betriebsbereitschaft der Vorrichtung. Schließlich ist ein Behälter 4 dargestellt, der das Abdichtmittel enthält und über Kopf in eine entsprechende Aufnahme des Gehäuses 1 eingesetzt ist.

Das Verbindungskabel 2 ist in einer ersten Aufnahme 5 des Gehäuses 1 untergebracht, während der Stecker 3 in eine zweite Aufnahme 6 des Gehäuses 1 eingesetzt ist. Wie man sieht, sind die beiden Aufnahmen 5 und 6 nebeneinander angeordnet, wobei die Aufnahme 6 für den Stecker 3 in einem Eckbereich zwischen einer Schmalseite 7 und einer Breitseite 8 des Gehäuses 1 vorgesehen ist. Die Aufnahme 6 für den Stecker 3 ist dabei so ausgebildet, dass der Stecker 3 in einer aufrechten Position angeordnet werden kann. Zudem ist die Aufnahme 6 so ausgebildet, dass ein unterer Teil 9 des Steckers 3 über die Wände 7 und 8 des Gehäuses 1 übersteht. Auf diese Weise kann der Stecker 3 von außen leicht gegriffen werden.

Zwischen der Aufnahme 5 für das Anschlusskabel 2 und der Aufnahme 6 für den Stecker 3 ist eine von außen her zugängliche Durchführung 10 vorhanden, in welche das zum Stecker 3 führende Kabel eingelegt ist. Das Kabel 2 steht dadurch nicht über das Gehäuse 1 über.

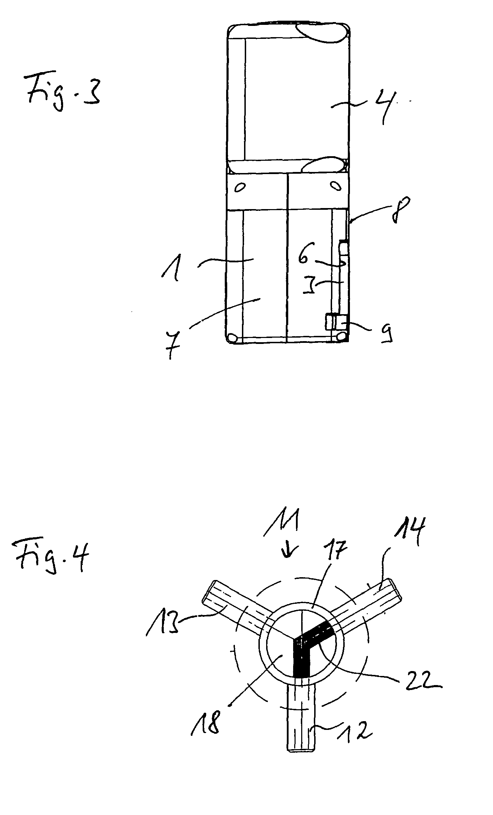

Fig. 4 zeigt ein nicht erfindungsgemäßes Detail, nämlich ein Umschaltventil 11 zum Umschalten der Verbindung zwischen elektrischer Pumpe oder Kompressor einerseits und wahlweise einer Verbindung zu dem Behälter 4 mit einem ersten Schlauch zum Einbringen von Mittel oder Abdichtmittel in den Reifen oder einem zweiten Schlauch zum reinen Aufpumpen des Reifens andererseits. Das in Fig. 4 dargestellte Ventil 11 ist ein 3/2-Wegeventil mit einem Eingang 12, der mit der elektrischen Pumpe oder dem Kompressor verbunden ist, und zwei Ausgängen 13 und 14, von denen der eine mit dem Behälter 4 und der andere mit dem zweiten Schlauch verbunden ist.

Durch dieses 3/2-Wegeventil 11 kann wahlweise ein Reifen nur aufgepumpt oder zunächst mit Abdichtmittel versorgt und dann aufgepumpt werden. Soll der Reifen nur aufgepumpt werden, so wird der Eingang 12 direkt mit dem Ausgang 13 zum zweiten Schlauch verbunden, indem das Wegeventil 11 entsprechend geschaltet wird. Soll dagegen zunächst Abdichtmittel in den Reifen eingebracht werden, so wird der Eingang 12 mit dem Ausgang 14 verbunden, der mit dem Behälter 4 in Verbindung steht. Dadurch wird die von der elektrischen Pumpe oder dem Kompressor gelieferte Luft zunächst in den Behälter 4 eingebracht und entleert dadurch diesen in den ersten Schlauch, der zum Reifen führt. Erst nach Entleerung des Behälters 4 wird dann auf diesem Wege Luft in den Reifen eingebracht, um den Reifen aufzupumpen. Möglich wäre auch nur einen Schlauch zu verwenden. Dieser ist dann sowohl mit dem Ausgang 13 als auch mit dem Auslass des Behälters 4 verbunden. Fehlströme können durch Rückschlagventile vermieden werden.

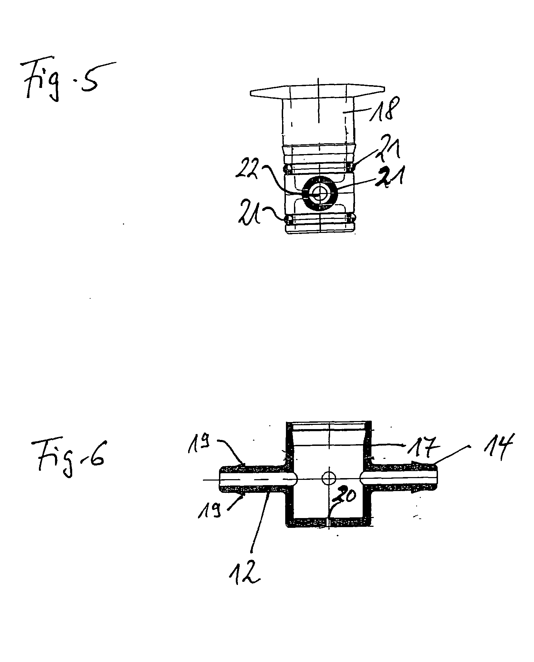

Die Fig. 5 und 6 zeigen den Aufbau des nicht erfindungsgemäßen 3/2-Wegeventils 11, welches ein Gehäuse 17 und einen Ventileinsatz 18 umfasst. Das Gehäuse 17 ist topfförmig ausgebildet. Der Eingang 12 und die beiden Ausgänge 13 und 14 sind stutzenartig an das Gehäuse 17 angeformt und mit radial nach außen vorspringenden Nasen 19 versehen, um einen sichere Befestigung eines hier nicht dargestellten Verbindungsschlauches sicherzustellen. Im Boden des Gehäuses 17 ist ein Entlüftungsloch 20 vorgesehen.

Der Ventileinsatz 18 ist im Querschnitt T-förmig ausgebildet und weist vier O-Ringe 21 zur Abdichtung auf, von denen in Fig. 5 nur drei erkennbar sind. Im Ventileinsatz 18 ist ein abgewinkelter Durchflusskanal 22 ausgebildet, über welchen je nach Stellung des Ventils 11 der Eingang 12 wahlweise mit einem der beiden Ausgänge 13 und 14 verbindbar ist. Wie man in Fig. 5 sieht, sind zwei der O-Ringe 21 oberhalb und unterhalb des Kanals 22 vorgesehen, während der dritte O-Ring 21 und der in Fig. 5 nicht erkennbare vierte O-Ring um die Eintritts- bzw. die Austrittsöffnung des Durchflusskanals 22 angeordnet sind. Dadurch ist eine sichere Abdichtung des Durchflusskanals 22 und des Eingangs 12 sowie der Ausgänge 13 und 14 gewährleistet. Die Umschaltung des Ventils 11 kann in beliebiger Weise erfolgen, beispielsweise mechanisch, aber auch elektrisch oder pneumatisch. Statt O-Ringen kann natürlich auch eine andere Abdichtung vorgesehen sein, beispielsweise eingearbeitetes thermoplastisches Elastomer (TPE).

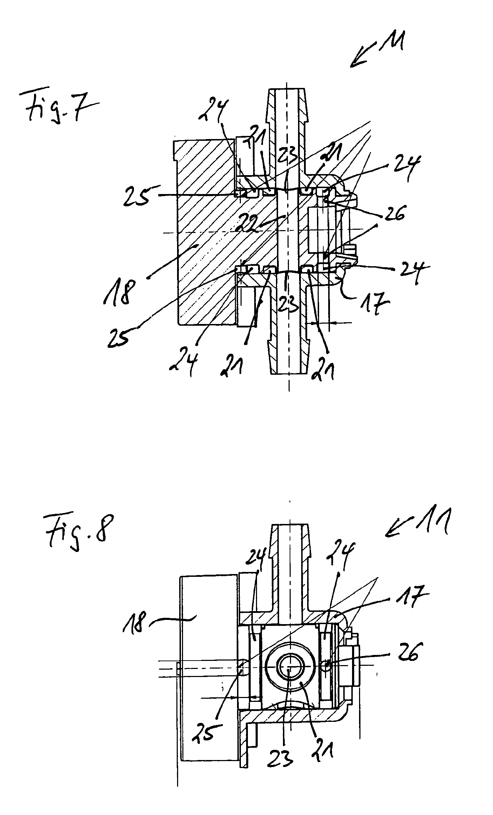

Das in den Fig. 7 und 8 dargestellte erfindungsgemäße 3/2-Wegeventil 11 stimmt vom Grundaufbau mit dem zuvor beschriebenen 3/2-Wegeventil 11 überein. Es weist jedoch gegenüber diesem eine Druckentlastung auf, um in Zwischenstellungen die Druckluft des Kompressors abzuführen. Um die Druckentlastung zu realisieren, weist das erfindungsgemäße 3/2-Wegeventil 11 O-Ringe 21 lediglich um die Öffnungen 23 des Durchflusskanals 22 auf, während der Ventileinsatz 18 im Übrigen ohne Dichtung ausgebildet ist. Wie bei dem nicht erfindungsgemäßen Ventil 11 sind zwar beidseits der Öffnungen 23 Ringnuten 24 vorhanden, in diese sind jedoch keine O-Ringe eingesetzt. Dadurch kann in Zwischenstellungen des Ventils 11 Druckluft über das Spiel zwischen Ventileinsatz 18 und Ventilgehäuse 17 abströmen. Um das Abströmen zu erleichtern, sind außerdem zwei Sackbohrungen 25 sowie zwei Durchtrittsbohrungen 26 vorgesehen, die die beiden Ringnuten 24 mit dem Außenraum verbinden.

### Bezugszeichenliste

- 1: Gehäuse
- 2: Anschlusskabel
- 3: Stecker
- 4: Behälter
- 5: erste Aufnahme
- 6: zweite Aufnahme
- 7: Schmalseite
- 8: Breitseite
- 9: Teil von 3
- 10: Durchführung
- 11: 3/2-Wegeventil
- 12: Eingang
- 13: Ausgang
- 14: Ausgang
- 15: Ein/Aus-Schalter
- 16: LED
- 17: Ventilgehäuse
- 18: Ventileinsatz
- 19: Nase
- 20: Entlüftungsloch
- 21: O-Ring
- 22: Durchflusskanal
- 23: Öffnung
- 24: Ringnut
- 25: Sackbohrung
- 26: Durchtrittsbohrung

## Patentansprüche

1. Vorrichtung zum Einbringen von Luft und/oder Abdichtmittel in einen Reifen, insbesondere Kraftfahrzeugreifen, mit einer elektrischen Pumpe oder Kompressor, einem elektrischen Anschlusskabel (2) für die Pumpe oder den Kompressor, welches an seinem Ende ein Verbindungselement (3), insbesondere Stecker, aufweist zur Verbindung des Anschlusskabels (2) mit einer Stromversorgung, insbesondere dem Zigarrenanzünder eines Kraftfahrzeuges, mit einem mit der elektrischen Pumpe oder dem Kompressor verbundenen oder verbindbaren Schlauch für die Luft und/oder das Abdichtmittel, dessen anderes Ende mit dem zu befüllenden Reifen verbindbar ist, und mit einem Gehäuse (1) zur Aufnahme mindestens eines Teils der Vorrichtungsbestandteile, wobei ein Umschaltventil (11) zum Umschalten der Verbindung zwischen elektrischer Pumpe oder Kompressor einerseits und wahlweise einer Verbindung zu dem Behälter (4) mit einem Schlauch zum Einbringen von Luft oder Abdichtmittel in den Reifen oder einem Schlauch zum reinen Aufpumpen des Reifens andererseits vorgesehen ist,
**dadurch gekennzeichnet, dass**
das Umschaltventil (11) eine Druckentlastung zum Abführen der Druckluft in Zwischenstellungen des Ventils (11) aufweist.

2. Vorrichtung nach Anspruch 1,
**dadurch gekennzeichnet, dass**
das Umschaltventil (11) als 3/2-Wegeventil ausgebildet ist.

3. Vorrichtung nach Anspruch 1 oder 2,
**dadurch gekennzeichnet, dass**
das Umschaltventil (11) einen in einem Gehäuse (17) drehbar gelagerten Ventileinsatz (18) mit einer Eintrittsöffnung (23) und zwei Austrittsöffnungen (23) aufweist, die ringsum gegenüber dem Ventilgehäuse (17) abgedichtet sind, während der Ventileinsatz (18) im Übrigen gegenüber dem Ventilgehäuse (17) nicht oder nicht vollständig abgedichtet ist.

4. Vorrichtung nach Anspruch 3,
**dadurch gekennzeichnet, dass**
der Ventileinsatz (18) auf mindestens einer Seite der Öffnungen (23) eine umlaufende Ringnut (24) als Druckentlastungskanal aufweist.

5. Vorrichtung nach Anspruch 4,
**dadurch gekennzeichnet, dass**
die Ringnut (24) über mindestens ein Sackloch (25) und/oder eine Durchtrittsöffnung (26) mit dem Außenraum in Verbindung steht.

6. Vorrichtung nach einem der vorhergehenden Ansprüche,
**dadurch gekennzeichnet, dass**
das Gehäuse (1) für das Anschlusskabel (2) einerseits und das Verbindungselement (3) des Anschlusskabels (2) andererseits jeweils eine eigene Aufnahme (5, 6) aufweist.

7. Vorrichtung nach Anspruch 6,
**dadurch gekennzeichnet, dass**
die Aufnahme (6) für das Verbindungselement (3) von den Dimensionen her weitgehend passgenau an das Verbindungselement (3) angepasst ist.

8. Vorrichtung nach Anspruch 6 oder 7,
**dadurch gekennzeichnet, dass**
die Aufnahme (6) eine Ausnehmung für den Eingriff eines Fingers aufweist und/oder so ausgebildet ist, dass ein Abschnitt (9) des Verbindungselementes (3) über das Gehäuse (1) übersteht.

9. Vorrichtung nach einem der Ansprüche 6 bis 8,
**dadurch gekennzeichnet, dass**
die Aufnahme (6) für das Verbindungselement (3) in einem gut sichtbaren Bereich des Gehäuses (1) angeordnet ist.

10. Vorrichtung nach einem der Ansprüche 6 bis 9,
**dadurch gekennzeichnet, dass**
die Aufnahme (6) für das Verbindungselement (3) in einer Seitenwand (7, 8) des Gehäuses (1) angeordnet ist.

11. Vorrichtung nach einem der Ansprüche 6 bis 10,
**dadurch gekennzeichnet, dass**
die Aufnahme (6) für das Verbindungselement (3) in einem zwei benachbarte Seiten (7, 8) des Gehäuses (1) übergreifenden Eckbereich angeordnet ist.

12. Vorrichtung nach einem der Ansprüche 6 bis 11,
**dadurch gekennzeichnet, dass**
die beiden Aufnahmen (5, 6) unmittelbar nebeneinander angeordnet sind.

13. Vorrichtung nach einem der Ansprüche 6 bis 12,
**dadurch gekennzeichnet, dass**
zwischen den Aufnahmen (5, 6) eine nach außen offene Durchführung (10) zur Einlage eines Kabelabschnitts vorgesehen ist.

14. Vorrichtung nach einem der Ansprüche 6 bis 13,
**dadurch gekennzeichnet, dass**
die Aufnahme (6) so ausgebildet ist, dass das Verbindungselement (3) im Betriebszustand des Gehäuses (1) aufrecht angeordnet ist.

15. Vorrichtung nach einem der Ansprüche 6 bis 14,
**dadurch gekennzeichnet, dass**
die Durchführung (10) zwischen den beiden Aufnahmen (5, 6) im unteren Bereich des Gehäuses (1) angeordnet ist.

## Claims

1. An apparatus for the introduction of air and/or sealant into a tire, in particular a motor vehicle tire, having an electric pump or compressor, an electric connection cable (2) for the pump or compressor which has a connection element (3), in particular a plug, at its end for the connection of the connection cable (2) to a power supply, in particular to the cigarette lighter of a motor vehicle, having a hose for the air and/or the sealant which is or can be connected to the electric pump or compressor and whose other end can be connected to the tire to be filled, and having a housing (1) for the reception of at least some of the apparatus components, wherein a switch valve (11) is provided for the switching over of the connection between the electric pump or compressor, on the one hand, and selectively a connection to the container (4) is provided having a hose for the introduction of air or sealant into the tire or to a hose for the pure inflation of the tire, on the other hand, **characterized in that**
the switch valve (11) has a pressure relief for the discharge of the compressed air in intermediate positions of the valve (11).

2. An apparatus in accordance with claim 1,
**characterized in that**
the switch valve (11) is designed as a 3/2-way valve

3. An apparatus in accordance with claim 1 or claim 2,
**characterized in that**
the switch valve (11) has a valve core (18) rotatably supported in a housing (17) and having an inlet opening (23) and two outlet openings (23) which are sealed all around with respect to the valve housing (17), whereas the valve core (18) is otherwise not sealed or is not completely sealed with respect to the valve housing (17).

4. An apparatus in accordance with claim 3,
**characterized in that**
the valve core (18) has a circumferential ring groove (24) as a pressure relief channel at at least one side of the openings (23).

5. An apparatus in accordance with claim 4,
**characterized in that**
the ring groove (24) is in communication with the outer space via at least one blind bore (25) and/or a passage opening (26).

6. An apparatus in accordance with any one of the preceding claims,
**characterized in that**
the housing (1) has in each case a separate receiver (5, 6) for the connection cable (2), on the one hand, and for the connection element (3) of the connection cable (2), on the other hand.

7. An apparatus in accordance with claim 6,
**characterized in that**
the receiver (6) for the connection element (3) is adapted largely in an exact fit to the connection element (3) with respect to the dimensions.

8. An apparatus in accordance with claim 6 or claim 7,
**characterized in that**
the receiver (6) has a recess for the intervention of a finger; and/or in that it is designed such that a section (9) of the connection element (3) projects beyond the housing (1).

9. An apparatus in accordance with any one of the claims 6 to 8,
**characterized in that**
the receiver (6) for the connection element (3) is arranged in an easily visible region of the housing (1).

10. An apparatus in accordance with any one of the claims 6 to 9,
**characterized in that**
the receiver (6) for the connection element (3) is arranged in a side wall (7, 8) of the housing (1).

11. An apparatus in accordance with any one of the claims 6 to 10,
**characterized in that**
the receiver (6) for the connection element (3) is arranged in a corner region engaging over two adjacent sides (7, 8) of the housing (1).

12. An apparatus in accordance with any one of the claims 6 to 11,
**characterized in that**
the two receivers (5, 6) are arranged directly next to one another.

13. An apparatus in accordance with any one of the claims 6 to 12,
**characterized in that**
an outwardly open leadthrough (10) is provided between the receivers (5, 6) for the insertion of a cable section.

14. An apparatus in accordance with any one of the claims 6 to 13,
**characterized in that**
the receiver (6) is designed such that the connection element (3) is arranged upright in the operating state of the housing (1).

15. An apparatus in accordance with any one of the claims 6 to 14,
**characterized in that**
the leadthrough (10) is arranged between the two receivers (5, 6) in the lower region of the housing (1).

## Revendications

1. Dispositif pour introduire de l'air et/ou un moyen d'étanchement dans un pneumatique, en particulier un pneumatique de véhicule automobile, comprenant une pompe ou un compresseur électrique, un câble de raccordement électrique (2) pour la pompe ou le compresseur, qui comporte à son extrémité un élément de connexion (3), en particulier une prise mâle, en vue de la liaison du câble de raccordement (2) avec une alimentation électrique, en particulier l'allume-cigare d'un véhicule automobile, comprenant un tuyau, relié ou susceptible d'être relié à la pompe électrique ou au compresseur pour l'air et/ou pour le moyen d'étanchement, dont l'autre extrémité est susceptible d'être reliée au pneumatique à remplir, et comprenant un boîtier (1) pour loger au moins une partie des éléments constitutifs du dispositif, dans lequel il est prévu une valve d'inversion (11) pour inverser la liaison entre la pompe électrique ou le compresseur d'une part et au choix une liaison au réservoir (4) avec un tuyau pour introduire de l'air ou un moyen d'étanchement dans le pneumatique ou avec un tuyau pour le gonflage proprement dit du pneumatique d'autre part,
**caractérisé en ce que**
la valve d'inversion (11) comporte un moyen de décharge de pression pour évacuer l'air comprimé dans des positions intermédiaires de la valve (11).

2. Dispositif selon la revendication 1,
**caractérisé en ce que** la valve d'inversion (11) est réalisée sous forme de vanne 3 voies/2 positions.

3. Dispositif selon la revendication 1 ou 2,
**caractérisé en ce que** la valve d'inversion (11) comprend un insert de valve (18) monté en rotation dans un boîtier (17) avec une ouverture d'entrée (23) et deux ouvertures de sortie (23), lesquelles sont étanchées sur tout leur pourtour par rapport au boîtier de valve, alors que l'insert de valve (18) n'est par ailleurs pas étanché ou n'est pas complètement étanché par rapport au boîtier de valve (17).

4. Dispositif selon la revendication 3,
**caractérisé en ce que** l'insert de valve (18) comporte sur au moins un côté des ouvertures (23) une gorge annulaire périphérique (24) à titre de canal de décharge de pression.

5. Dispositif selon la revendication 4,
**caractérisé en ce que** la gorge annulaire (24) communique avec le volume extérieur via au moins un trou borgne (25) et/ou une ouverture traversante (26).

6. Dispositif selon l'une des revendications précédentes,
**caractérisé en ce que** le boîtier (1) pour le câble de raccordement (2) d'une part et l'élément de liaison (3) du câble de raccordement (2) d'autre part comprennent chacun une propre réception (5, 6).

7. Dispositif selon la revendication 6,
**caractérisé en ce que** la réception (6) pour l'élément de liaison (3) est ajustée, quant à ses dimensions, largement exactement à l'élément de liaison (3).

8. Dispositif selon la revendication 6 ou 7,
**caractérisé en ce que** la réception (6) comprend un évidement pour engager un doigt et/ou est ainsi réalisé qu'un tronçon (9) de l'élément de liaison (3) dépasse au-delà du boîtier (1).

9. Dispositif selon l'une des revendications 1 6 a 8,
**caractérisé en ce que** la réception (6) pour l'élément de liaison (3) est agencée dans une région bien visible du boîtier (1).

10. Dispositif selon l'une des revendications 6 à 9,
**caractérisé en ce que** la réception (6) pour l'élément de liaison (3) est agencée dans une paroi latérale (7, 8) du boîtier (1).

11. Dispositif selon l'une des revendications 6 à 10,
**caractérisé en ce que** la réception (6) pour l'élément de liaison (3) est agencée dans une zone de coin qui coiffe deux côtés voisins (7, 8) du boîtier (1).

12. Dispositif selon l'une des revendications 6 à 11,
**caractérisé en ce que** les deux réceptions (5, 6) sont agencées directement l'une à côté de l'autre.

13. Dispositif selon l'une des revendications 6 à 12,
**caractérisé en ce qu'**une traversée (10) ouverte vers l'extérieur est prévue entre les réceptions (5, 6) pour la pose d'un tronçon de câble.

14. Dispositif selon l'une des revendications 6 à 13,
**caractérisé en ce que** la réception (6) est ainsi réalisée que l'élément de liaison (3) est agencé dressé verticalement dans l'état de fonctionnement du boîtier (1).

15. Dispositif selon l'une des revendications 6 à 14,
**caractérisé en ce que** la traversée (10) entre les deux réceptions (5, 6) est agencée dans la région inférieure du boîtier (1).
